# EUROPEAN PATENT SPECIFICATION

(11) **EP 2 279 889 B1**
(45) Date of publication and mention of the grant of the patent: **09.09.2015**
(21) Application number: 09164851.9
(22) Date of filing: 08.07.2009
(51) Int. Cl.: B60W 50/14, B60Q 9/00, B60W 30/095, G08G 1/16, G05D 1/02

(54) **Method and system for shoulder departure assistance in an automotive vehicle**
Verfahren und System zur Unterstützung des Verlassens der Standspur in einem Kraftfahrzeug
Procédé et système pour l'assistance de début d'épaulement dans un véhicule automobile

(43) Date of publication of application: 02.02.2011
(73) Proprietor: Volvo Car Corporation, 405 31 Göteborg (SE)
(72) Inventor: Karlsson, Peter, 41758 Göteborg (SE)
(74) Representative: Widahl, Jenny Marie

(56) References cited:
- EP-A2- 1 598 233
- US-A- 6 133 825
- US-A1- 2005 267 660
- US-A1- 2007 126 565
- US-B1- 6 415 226

## Description

### Technical field

The present invention relates to a system for shoulder departure assistance in an automotive vehicle in accordance with the preamble of claim 1.

The present invention also relates to a method for shoulder departure assistance in an automotive vehicle in accordance with the preamble of claim 8.

### Background of the invention

During road travel it is not uncommon that drivers leave their travelled lane to drive completely or partly in a shoulder or emergency lane in order to facilitate overtaking by vehicles approaching from behind. However, the shoulder or emergency lane travelled during such instances may end suddenly, or the road may have junctions in which the shoulder or emergency lane cannot be used. Further, other unforeseen obstacles may appear suddenly in the shoulder or emergency lane, such as e.g. stopped vehicles, bicycle riders or similar.

The above are examples of situations forcing the driver of a vehicle to steer the vehicle back into the lane which it previously left in order to facilitate overtaking by another vehicle.

However, the driver of the vehicle may be distracted, or for other reasons such as e.g. poor-illumination, weather conditions, drowsiness, limited line of sight or similar, be unaware of an upcoming threat in the shoulder or emergency lane. Simultaneously, another vehicle might be in the process of overtaking the vehicle, and thus preventing the vehicle to re-enter the lane which it previously left in order to facilitate overtaking.

US2007126565 discloses a process for blind zone monitoring in motor vehicles, wherein information is detected from the vehicle environment in order to recognize other traffic participants. Under the condition of an intent to carry out a lane change and the presence of other traffic participants in the blind zone of the own vehicle, a driver warning is emitted. Before a driving warning can however occur a check is carried out with respect to whether a lane change can even be carried out on the basis of the traffic infrastructure. Driving warnings are suppressed in the case that as a result of the check a lane change is not possible or permissible.

The above described scenarios may cause a very stressful situation for a driver of the vehicle as the driver often quite late will detect the threat and therefore will have to decide on what action to take quickly, whilst simultaneously assessing the possibilities and restrictions at hand.

### Summary of the invention

One object of the invention is to provide an improved system for shoulder lane departure assistance in an automotive vehicle.

This object is achieved by the system as claimed in claim 1.

Thanks to the provision of means for establishing lane assignment when travelling fully or partially in a shoulder; means for establishing the presence of upcoming changes in road properties of the assigned shoulder lane; means for establishing the presence of a vehicle in a lane adjacent to the shoulder lane assigned the vehicle hosting the system; means for executing a first driver warning - if established that upcoming changes in road properties are such that the assigned shoulder lane is unsuitable for further travel; and means for executing a second driver warning - if further established that a vehicle is present in a lane adjacent to the shoulder lane assigned the vehicle hosting the system, assistance is provided to a driver of a vehicle in departing a shoulder or emergency lane travelled in order to facilitate overtaking by another vehicle enabling safe return of the own vehicle to a previously travelled lane.

A further object of the invention is to provide an improved method in a system for shoulder lane departure assistance in an automotive vehicle.

This object is achieved by the method as claimed in claim 8.

Thanks to the provision of the steps of: establishing lane assignment when travelling fully or partially in a shoulder; establishing the presence of upcoming changes in road properties of the assigned shoulder lane; establishing the presence of a vehicle in a lane adjacent to the shoulder lane assigned the vehicle hosting the system; executing a first driver warning - if established that upcoming changes in road properties are such that the assigned shoulder lane is unsuitable for further travel; and executing a second driver warning - if further established that a vehicle is present in a lane adjacent to the shoulder lane assigned the vehicle hosting the system, assistance is provided to a driver of a vehicle in departing a shoulder or emergency lane travelled in order to facilitate overtaking by another vehicle enabling safe return of the own vehicle to a previously travelled lane.

Preferred embodiments are listed in the dependent claims.

### Description of drawings

In the following, the invention will be described in greater detail by way of example only with reference to attached drawings, in which
Fig. 1 is a schematic illustration of a system for shoulder departure assistance arranged in a host vehicle,
Fig. 2 illustrates a first road situation where a warning is issued,
Fig. 3 illustrates a second road situation where a warning is issued,
Fig. 4 illustrates a third road situation where the issuance of a warning is impeded for reducing false warnings.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

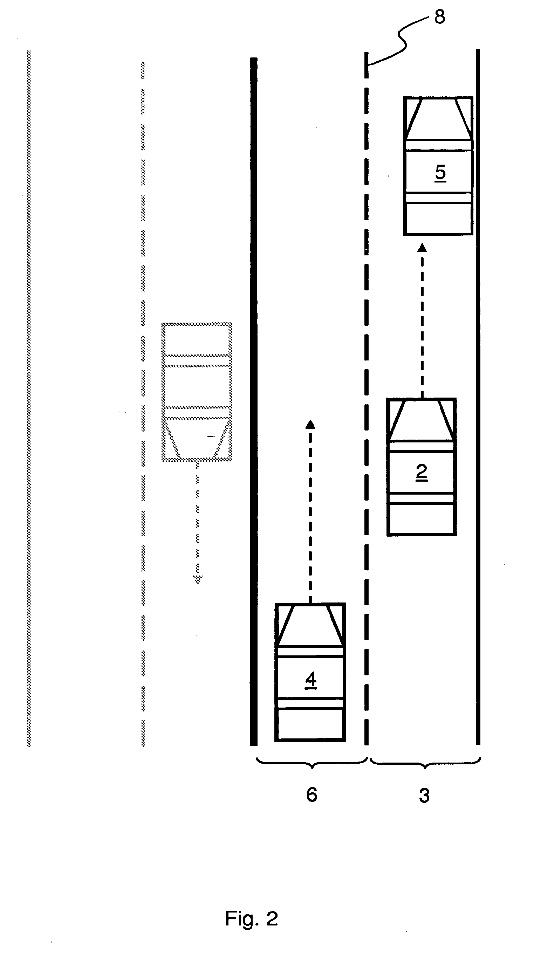

The present invention especially relates to a system 1 and method for assisting a driver of a vehicle 2, as illustrated in figure 2, in departing a shoulder or emergency lane 3 travelled in order to facilitate overtaking by another vehicle 4. The system 1 alerts the driver to upcoming obstacles 5 present in the shoulder or emergency lane 3. Furthermore, the system 1 also alerts the driver to the presence of overtaking vehicles 4 obstructing the possibility of safely returning the own vehicle to a previously travelled lane 6.

In figures 2 to 4, the dotted arrows illustrate movement of the vehicles 2 and 4. Lanes and vehicles for travel in the opposite direction have been grayed out.

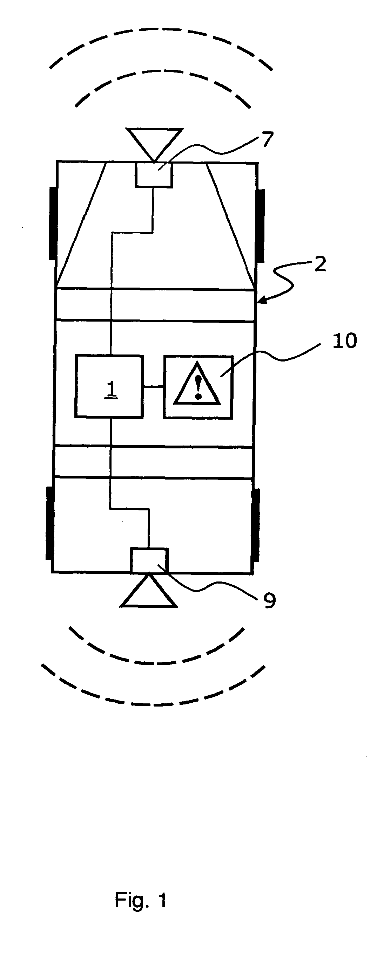

Figure 1 illustrates schematically a system 1 for shoulder departure assistance in an automotive vehicle, arranged in a host vehicle 2 in accordance with the present invention.

The system 1 for shoulder departure assistance in an automotive vehicle 2 is capable of detecting lane assignment and to detect upcoming changes in road properties, or the presence of obstacles 5 in front of the host vehicle 2, that will force the driver of the host vehicle 2 to leave the lane 3 currently travelled through e.g. the use of map data, combined with data from a sensor 7, that is mounted facing forward of the host vehicle 2 and arranged to monitor the region in front of the host vehicle 2.

The sensor 7 may comprise one or more of a camera based system, a RADAR (RAdio Detection And Ranging) based system, a LASER (Light Amplification by Stimulated Emission of Radiation) based system, a LIDAR (Llght Detection And Ranging) based system. The system 1 may also be arranged to acquire lane assignment information from vehicle infrastructure communication systems, or other sensors or fusions based on of one or more of the above technologies.

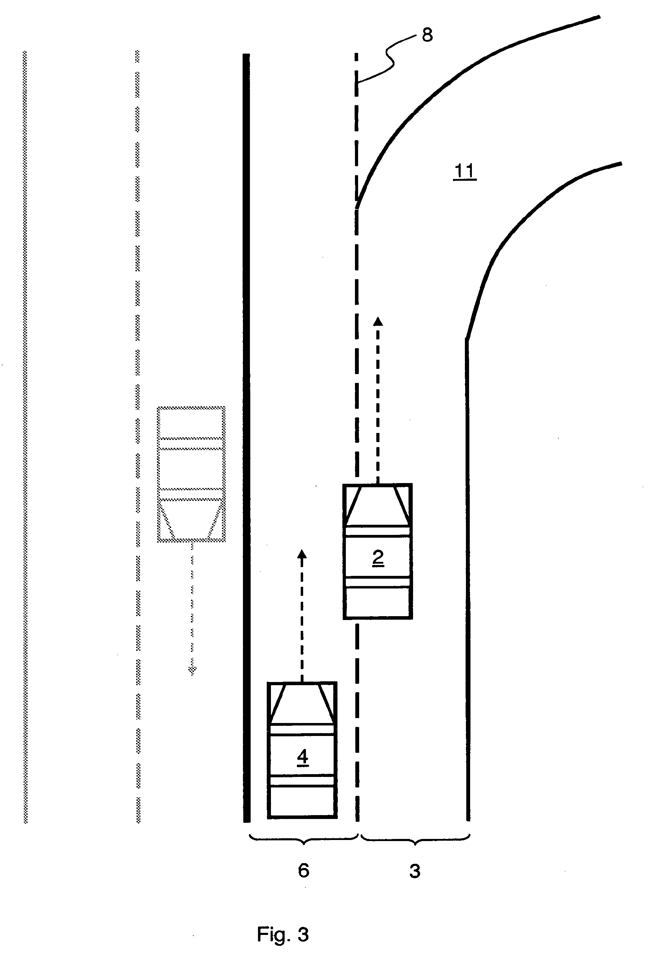

The host vehicle 2 may further be equipped with one ore more lane marker sensors, e.g. an integral part of sensor 7 or as separate entities (not shown), which provide for sufficiently good detection of lane markers 8 (see figures 2 to 4). The detection of lane markers 8 thereby may also be used by the system 1 for detecting lane assignment. The area between left hand side and right hand side lane markers 8 may be used to define the lane travelled. In the case that only lane markers 8 at one side of the host vehicle 2 are detected sufficiently well, these lane markers 8 may be used for defining that side of the lane 3 travelled whilst the other side of the lane 3 travelled may be detected using e.g. camera based systems relying on image processing or similar process, or radar based systems relying on differentiation of reflection from different ground surfaces, such as asphalt, concrete, dirt, etc. In case the vehicle travel's only partially in a shoulder or emergency lane 3, e.g. as illustrated in figure 3 this partial lane usage may also be defined using the lane marker sensors for sensing the host vehicle 2 travelling on top of a lane marker 8.

A map data system part of the system 1 may be arranged to acquire map data using position information from satellite based navigation systems, such as e.g. a Global Positioning System (GPS) or a GLObal NAvigation Satellite System (GLONASS), the Global Navigation Satellite System (GNSS) currently being built by the European Union (EU) and European Space Agency (ESA) or the Chinese COMPASS Navigation System, in combination with electronic map data. Map data may also be communicated to the map data system by a vehicle infrastructure communication system.

The system 1 is also capable of detecting vehicles 4 travelling behind or in the process of overtaking the host vehicle 2 through e.g. the use of data from a sensor 9, which is mounted facing rearward of the host vehicle 2 and arranged to monitor the region behind and at least partially adjacent the host vehicle 2. The sensor 9 may comprise one or more of a camera based system, a radar based system, a laser based system, a lidar based system or other sensors or fusions based on of one or more of the above technologies to monitor the region behind and at least partially adjacent the host vehicle 2.

When the host vehicle 2 is travelling in a shoulder or emergency lane 3, with vehicles 5 close behind or overtaking, as illustrated in figure 2, and when a need to depart the shoulder or emergency lane 3 is detected, e.g. as shown a stationary vehicle 5, a warning is provided by the system 1 to the driver of the host vehicle 2. This warning may be given before the driver of the host vehicle 2 has been able, e.g. using eyesight, to detect the threat 5 necessitating lane departure, and thus provide a sufficiently advance warning to prevent the lane departure maneuver from becoming dangerous and/or stressful to the driver of the host vehicle 2. Driver warnings may be provided through a warning unit 10 as acoustic warnings, e.g. sounds of different kinds, visual warnings, e.g. flashing warning lights or warning symbols presented to an information display of the host vehicle 2, tactile warnings, e.g. through vibrations transmitted via the steering wheel, drivers seat or otherwise possible to be sensed by the driver of the host vehicle 2. Warnings may of course be constituted by any combination of the above examples.

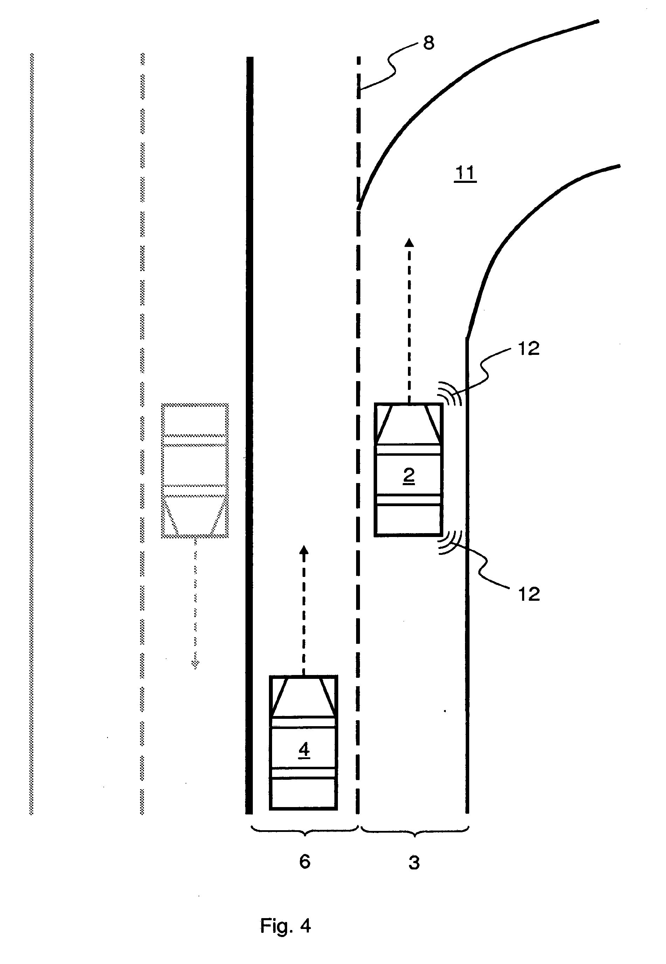

False warnings, from e.g. when the driver of the host vehicle 2 is about to turn in an upcoming intersection 11, as illustrated in figure 4, may be reduced using a driver state estimate. If the driver of the host vehicle 2, based on one or more signals monitored, such as e.g. turn indicators 12, acceleration/deceleration, set route from a navigation system, etc, is interpreted as intending to turn in an upcoming intersection 11, no warning is provided to the driver of the host vehicle 2. Conversely, if the driver of the host vehicle 2, based on the one ore more signals monitored, is interpreted as not intending to turn in the upcoming intersection 11, the system 1 provides a warning to the driver of the host vehicle 2.

An advantage with the proposed solution, compared to conventional methods, is that it will lead to fewer false alarms. In the end, it could be the difference between being able to reach an acceptable level of false alarms or not. Furthermore, warning may be given before the driver of the host vehicle 2, e.g. using eyesight, has been able to detect the threat 5, and thus provide a sufficiently advance warning to prevent the lane departure maneuver from becoming dangerous and/or stressful to the driver of the host vehicle 2. Thus, the positive performance may also be increased, which in this case means earlier interventions and higher safety benefits by the system 1.

Thus, in accordance with the present invention is provided a system 1 for shoulder departure assistance in an automotive vehicle 2. The system 1 comprises: means 7 for establishing lane assignment when travelling fully or partially in a shoulder; means 7 for establishing the presence of upcoming changes in road properties of the assigned shoulder lane 3; means 9 for establishing the presence of a vehicle 4 in a lane 6 adjacent to the shoulder lane 3 assigned the vehicle 2 hosting the system 1; means 10 for executing a first driver warning - if established that upcoming changes in road properties are such that the assigned shoulder lane 3 is unsuitable for further travel; and means 10 for executing a second driver warning - if further established that a vehicle 4 is present in a lane 6 adjacent to the shoulder lane 3 assigned the vehicle 2 hosting the system 1.

In one embodiment, the means 7 for establishing lane assignment and for establishing the presence of upcoming changes in road properties of the assigned shoulder lane 3 comprises a map data system, and a sensor 7 system, that is mounted facing forward of the host vehicle 2 and arranged to monitor the region in front of the host vehicle 2.

In a further embodiment, the sensor 7 system arranged to monitor the region in front of the host vehicle 2 comprises one or more of a camera based system, a RADAR based system, a LASER based system, and a LIDAR based system.

In a yet further embodiment, the means 9 for establishing the presence of a vehicle 4 in a lane 6 adjacent to the shoulder lane 3 assigned the vehicle 2 hosting the system comprises a sensor 9 system, which is mounted facing rearward of the host vehicle 2 and arranged to monitor the region behind and at least partially adjacent the host vehicle 2.

In a still further embodiment, the sensor 9 system arranged to monitor the region behind and at least partially adjacent the host vehicle 2 comprises one or more of a camera based system, a RADAR based system, a LASER based system, and a LIDAR based system.

In another further embodiment, the means 10 for executing the first and second driver warnings comprises a warning unit 10 for producing one or more of: an acoustic warning, a visual warning, and a tactile warning.

In a still further embodiment, the system 1 further comprises means for reducing false warnings through impeding execution of driver warnings by the means 10 for executing the first and second driver warnings if a driver state estimate is interpreted as an intention to turn in an upcoming intersection, using a driver state estimate based on monitoring of one or more of: a turn indicator signal, an acceleration/deceleration signal, and a set route from a navigation system.

The present invention also relates to a method for shoulder departure assistance in an automotive vehicle 2 suitable to be utilized in a system 1 for shoulder departure assistance in an automotive vehicle 2 as described above. The method comprises the steps of: establishing lane assignment 3 when travelling fully or partially in a shoulder; establishing the presence of upcoming changes in road properties of the assigned shoulder lane 3; establishing the presence of a vehicle 4 in a lane 6 adjacent to the shoulder lane 3 assigned the vehicle 2 hosting the system 1; executing a first driver warning - if established that upcoming changes in road properties are such that the assigned shoulder lane 3 is unsuitable for further travel; and executing a second driver warning - if further established that a vehicle 4 is present in a lane 6 adjacent to the shoulder lane 3 assigned the vehicle 2 hosting the system 1.

The present invention further also relates to an automotive vehicle 2, comprising a system 1 for shoulder departure assistance in an automotive vehicle 2 as described above.

The invention is not limited to the above-described embodiments, but may be varied within the scope of the following claims.

Thus, while there have been shown and described and pointed out fundamental novel features of the invention as applied to a preferred embodiment thereof, it will be understood that various substitutions and changes in the form and details of the devices illustrated, and in their operation, may be made by those skilled in the art. It is the intention, therefore, to be limited only as indicated by the scope of the claims appended hereto.

## Claims

1. A system (1) for shoulder lane departure assistance in an automotive vehicle (2), **characterized in that** it comprises:
means (7) for establishing lane assignment (3) when vehicle (2) is travelling fully or partially in a shoulder lane (3);
means (7) for establishing the presence of upcoming changes in road properties of the assigned shoulder lane (3);
means (9) for establishing the presence of a vehicle (4) in a lane (6) adjacent to the shoulder lane (3);
means (10) for executing a first driver warning:
- if established that upcoming changes in road properties are such that the assigned shoulder lane (3) is unsuitable for further travel; and
means (10) for executing a second driver warning:
- if further established that a vehicle (4) is present in a lane (6) adjacent to the shoulder lane (3).

2. A system (1) according to claim 1,
**characterized in that** the means (7) for establishing lane assignment and for establishing the presence of upcoming changes in road properties of the assigned shoulder lane (3) comprises a map data system, and a sensor (7) system, that is mounted facing forward of the host vehicle (2) and arranged to monitor the region in front of the host vehicle (2).

3. A system (1) according to claim 2,
**characterized in that** the sensor (7) system comprises one or more of a camera based system, a RADAR based system, a LASER based system, and a LIDAR based system.

4. A system (1) according to any one of claims 1 to 3,
**characterized in that** the means (9) for establishing the presence of a vehicle (4) in a lane (6) adjacent to the shoulder lane (3) assigned the vehicle (2) hosting the system comprises a sensor (9) system, which is mounted facing rearward of the host vehicle (2) and arranged to monitor the region behind and at least partially adjacent the host vehicle (2).

5. A system (1) according to claim 4,
**characterized in that** the sensor (9) system comprises one or more of a camera based system, a RADAR based system, a LASER based system, and a LIDAR based system.

6. A system (1) according to any one of claims 1 to 5,
**characterized in that** the means (10) for executing the first and second driver warnings comprises a warning unit (10) for producing one or more of: an acoustic warning, a visual warning, and a tactile warning.

7. A system (1) according to any one of claims 1 to 6,
**characterized in that** it further comprises means for reducing false warnings through impeding execution of driver warnings by the means (10) for executing the first and second driver warnings if a driver state estimate is interpreted as an intention to turn in an upcoming intersection, using a driver state estimate based on monitoring of one or more of: a turn indicator signal, an acceleration/deceleration signal, and a set route from a navigation system.

8. A method in a system for shoulder lane departure assistance in an automotive vehicle (2) according to any one of claims 1 to 7, **characterized in that** it comprises the steps of:
establishing lane assignment (3) when vehicle is travelling fully or partially in a shoulder lane (3);
establishing the presence of upcoming changes in road properties of the assigned shoulder lane (3);
establishing the presence of a vehicle (4) in a lane (6) adjacent to the shoulder lane (3);
executing a first driver warning:
- if established that upcoming changes in road properties are such that the assigned shoulder lane (3) is unsuitable for further travel; and
executing a second driver warning:
- if further established that a vehicle (4) is present in a lane (6) adjacent to the shoulder lane (3).

9. An automotive vehicle (2), **characterized in that** it comprises a system (1) for shoulder departure assistance in an automotive vehicle (2) according to any one of claims 1 to 7.

## Patentansprüche

1. System (1) zur Unterstützung des Verlassens der Standspur in einem Kraftfahrzeug (2), **dadurch gekennzeichnet, dass** es Folgendes umfasst:
Mittel (7) zum Ermitteln der Fahrspurzuweisung (3), wenn das Fahrzeug (2) vollständig oder teilweise in einer Standspur (3) fährt,
Mittel (7) zum Ermitteln der Gegenwart bevorstehender Änderungen der Straßeneigenschaften der zugewiesenen Standspur (3),
Mittel (9) zum Ermitteln der Gegenwart eines Fahrzeugs (4) in einer Fahrspur (6) neben der Standspur (3),
Mittel (10) zum Ausführen einer ersten Warnung des Fahrers:
- falls ermittelt wird, dass bevorstehende Änderungen der Straßeneigenschaften derart sind, dass die zugewiesene Standspur (3) für weiteres Fahren ungeeignet ist, und
Mittel (10) zum Ausführen einer zweiten Warnung des Fahrers:
- falls ferner ermittelt wird, dass ein Fahrzeug (4) in einer Fahrspur (6) neben der Standspur (3) gegenwärtig ist.

2. System (1) nach Anspruch 1, **dadurch gekennzeichnet, dass** das Mittel (7) zum Ermitteln der Fahrspurzuweisung und zum Ermitteln der Gegenwart bevorstehender Änderungen der Straßeneigenschaften und der zugewiesenen Standspur (3) ein Kartendatensystem und ein Sensorsystem (7) umfasst, das zur Vorderseite des Trägerfahrzeugs (2) gerichtet montiert und angeordnet ist, um den Bereich vor dem Trägerfahrzeug (2) zu überwachen.

3. System (1) nach Anspruch 1, **dadurch gekennzeichnet, dass** das Sensorsystem (7) ein auf Kamera basierendes System und/oder ein auf RADAR basierendes System und/oder ein auf LASER basierendes System und/oder ein auf LIDAR basierendes System umfasst.

4. System (1) nach einem der Ansprüche 1 bis 3, **dadurch gekennzeichnet, dass** das Mittel (9) zum Ermitteln der Gegenwart eines Fahrzeugs (4) in einer Fahrspur (6) neben der Standspur (3), die dem Fahrzeug (2), das das System trägt, zugewiesen ist, ein Sensorsystem (9) umfasst, das zur Rückseite des Trägerfahrzeugs (2) gerichtet montiert und angeordnet ist, um den Bereich hinter und mindestens teilweise neben dem Trägerfahrzeug (2) zu überwachen.

5. System (1) nach Anspruch 4, **dadurch gekennzeichnet, dass** das Sensorsystem (9) ein auf einer Kamera basierendes System und/oder ein auf einem RADAR basierendes System und/oder ein auf einem LASER basierendes System und/oder ein auf einem LIDAR basierendes System umfasst.

6. System (1) nach einem der Ansprüche 1 bis 5, **dadurch gekennzeichnet, dass** das Mittel (10) zum Ausführen der ersten und zweiten Warnung des Fahrers eine Warneinheit (10) zum Erzeugen einer akustischen Warnung und/oder einer visuellen Warnung und/oder einer taktilen Warnung umfasst.

7. System (1) nach einem der Ansprüche 1 bis 6, **dadurch gekennzeichnet, dass** es ferner Mittel zum Verringern von Fehlwarnungen durch Verhindern der Ausführung der Warnungen des Fahrers durch das Mittel (10) zum Ausführen der ersten und zweiten Warnung des Fahrers umfasst, falls eine Fahrerzustandsschätzung als eine Absicht ausgelegt wird, an einer kommenden Kreuzung abzubiegen, Verwenden einer Fahrerzustandsschätzung basierend auf dem Überwachen eines Blinkersignals und/oder Beschleunigungs-/Verlangsamungssignals und/oder einer eingestellten Route von einem Navigationssystem.

8. Verfahren in einem System zur Unterstützung des Verlassens der Standspur in einem Kraftfahrzeug (2) nach einem der Ansprüche 1 bis 7, **dadurch gekennzeichnet, dass** es die folgenden Schritte umfasst:
Ermitteln der Fahrspurzuweisung (3), wenn das Fahrzeug vollständig oder teilweise auf einer Standspur (3) fährt,
Ermitteln der Gegenwart bevorstehender Änderungen der Straßeneigenschaften der zugewiesenen Standspur (3),
Ermitteln der Gegenwart eines Fahrzeugs (4) in einer Fahrspur (6) neben der Standspur (3),
Ausführen einer ersten Warnung des Fahrers:
- falls ermittelt wird, dass bevorstehende Änderungen der Straßeneigenschaften derart sind, dass die zugewiesene Standspur (3) für weiteres Fahren ungeeignet ist, und
Ausführen einer zweiten Warnung des Fahrers:
- falls ferner ermittelt wird, dass ein Fahrzeug (4) in einer Fahrspur (6) neben der Standspur (3) gegenwärtig ist.

9. Kraftfahrzeug (2), **dadurch gekennzeichnet, dass** es ein System (1) zur Unterstützung des Verlassens der Standspur in einem Kraftfahrzeug (2) nach einem der Ansprüche 1 bis 7 umfasst.

## Revendications

1. Système (1) d'aide au départ d'une voie d'accotement sur un véhicule automobile (2), **caractérisé en ce qu'**il comporte :
un moyen (7) servant à établir une affectation de voie (3) lorsque le véhicule (2) circule entièrement ou partiellement dans une voie (3) d'accotement ;
un moyen (7) servant à établir la présence de changements à venir dans les propriétés routières de la voie (3) d'accotement affectée ;
un moyen (9) servant à établir la présence d'un véhicule (4) dans une voie (6) adjacente à la voie (3) d'accotement ;
un moyen (10) servant à exécuter une première alerte du conducteur :
- s'il est établi que des changements à venir dans les propriétés routières sont tels que la voie (3) d'accotement affectée est inadaptée à la poursuite de la circulation ; et
un moyen (10) servant à exécuter une deuxième alerte du conducteur :
- s'il est en outre établi qu'un véhicule (4) est présent dans une voie (6) adjacente à la voie (3) d'accotement.

2. Système (1) selon la revendication 1,
**caractérisé en ce que** le moyen (7) servant à établir l'affectation de voie et à établir la présence de changements à venir dans les propriétés routières de la voie (3) d'accotement affectée comporte un système de données cartographiques et un système de capteur (7), qui est monté orienté vers l'avant du véhicule hôte (2) et disposé de façon à surveiller la région située devant le véhicule hôte (2).

3. Système (1) selon la revendication 2,
**caractérisé en ce que** le système de capteur (7) comporte un ou plusieurs systèmes parmi un système basé sur une caméra, un système basé sur un RADAR, un système basé sur un LASER et un système basé sur un LIDAR.

4. Système (1) selon l'une quelconque des revendications 1 à 3,
**caractérisé en ce que** le moyen (9) servant à établir la présence d'un véhicule (4) dans une voie (6) adjacente à la voie (3) d'accotement affectée au véhicule (2) accueillant le système comporte un système de capteur (9), qui est monté orienté vers l'arrière du véhicule hôte (2) et disposé de façon à surveiller la région située derrière et au moins partiellement à côté du véhicule hôte (2).

5. Système (1) selon la revendication 4,
**caractérisé en ce que** le système de capteur (9) comporte un ou plusieurs systèmes parmi un système basé sur une caméra, un système basé sur un RADAR, un système basé sur un LASER et un système basé sur un LIDAR.

6. Système (1) selon l'une quelconque des revendications 1 à 5,
**caractérisé en ce que** le moyen (10) servant à exécuter les première et deuxième alertes du conducteur comporte une unité (10) d'alerte servant à produire une ou plusieurs alertes parmi : une alerte acoustique, une alerte visuelle et une alerte tactile.

7. Système (1) selon l'une quelconque des revendications 1 à 6,
**caractérisé en ce qu'**il comporte en outre un moyen servant à réduire les fausses alertes en faisant bloquer l'exécution d'alertes du conducteur par le moyen (10) servant à exécuter les première et deuxième alertes du conducteur si une estimation d'état du conducteur est interprétée comme une intention de tourner à une intersection à venir, en utilisant une estimation d'état du conducteur basée sur la surveillance d'un ou plusieurs éléments parmi : un signal de clignotant, un signal d'accélération/de décélération, et un itinéraire spécifié à partir d'un système de navigation.

8. Procédé dans un système d'aide au départ d'une voie d'accotement sur un véhicule automobile (2) selon l'une quelconque des revendications 1 à 7, **caractérisé en ce qu'**il comporte les étapes consistant à :
établir une affectation de voie (3) lorsque le véhicule circule entièrement ou partiellement dans une voie (3) d'accotement ;
établir la présence de changements à venir dans les propriétés routières de la voie (3) d'accotement affectée ;
établir la présence d'un véhicule (4) dans une voie (6) adjacente à la voie (3) d'accotement ;
exécuter une première alerte du conducteur :
- s'il est établi que des changements à venir dans les propriétés routières sont tels que la voie (3) d'accotement affectée est inadaptée à la poursuite de la circulation ; et
exécuter une deuxième alerte du conducteur :
- s'il est en outre établi qu'un véhicule (4) est présent dans une voie (6) adjacente à la voie (3) d'accotement.

9. Véhicule automobile (2), **caractérisé en ce qu'**il comporte un système (1) d'aide au départ d'un accotement sur véhicule automobile (2) selon l'une quelconque des revendications 1 à 7.
